# EUROPÄISCHE PATENTSCHRIFT

(11) **EP 2 766 882 B1**
(45) Veröffentlichungstag und Bekanntmachung des Hinweises auf die Patenterteilung: **30.12.2015**
(21) Anmeldenummer: 12772075.3
(22) Anmeldetag: 05.10.2012
(51) Int. Cl.: G07C 9/00, B60R 25/20

(54) **VERFAHREN ZUR AUTOMATISCHEN BETÄTIGUNG EINES SCHLIESSELEMENTS EINES FAHRZEUGS SOWIE ENTSPRECHENDE VORRICHTUNG UND FAHRZEUG**
METHOD FOR AUTOMATICALLY ACTUATING A CLOSING ELEMENT OF A VEHICLE, CORRESPONDING DEVICE, AND VEHICLE
PROCÉDÉ POUR LA COMMANDE AUTOMATIQUE D'UN ÉLÉMENT DE FERMETURE D'UN VÉHICULE, DISPOSITIF CORRESPONDANT ET VÉHICULE Y RELATIF

(30) Priorität: 12.10.2011 DE 102011115760
(43) Veröffentlichungstag der Anmeldung: 20.08.2014
(73) Patentinhaber: Volkswagen Aktiengesellschaft, 38440 Wolfsburg (DE)
(72) Erfinder: ETTE, BERND, 38442 Wolfsburg (DE); AL NAHLAOUI, YASSER, 38448 Wolfsburg (DE); WOLF, RICHARD, 04277 Leipzig (DE)
(86) Internationale Anmeldenummer: PCT/EP2012/004175
(87) Internationale Veröffentlichungsnummer: WO 2013/053451

(56) Entgegenhaltungen:
- DE-A1-102010 018 164
- DE-B3-102005 032 402

## Beschreibung

Die vorliegende Erfindung betrifft ein Verfahren und eine Vorrichtung, um ein Schließelement (z. B. eine Tür oder eine Klappe) eines Fahrzeugs auch bei wechselnden Umfeldbedingungen sicher automatisch zu betätigen.

Die DE 103 36 335 A1 offenbart eine Schließvorrichtung für Fahrzeuge mit einem kapazitiven Näherungsschalter an einer Tür oder Klappe des Fahrzeugs, wobei große und kleine Kapazitätsänderungen gezählt werden. Normalerweise gilt zum Öffnen der Tür oder Klappe ein unterer Referenz-Schwellenwert, der von einer Kapazitätsänderung überschritten werden muss, um die Tür oder Klappe zu öffnen. Wenn aber beispielsweise aufgrund von Regen die Anzahl der Kapazitätsänderungen ein Limit übersteigt, gilt ein oberer Referenz-Schwellenwert.

Die DE 10 2010 018 164 A1 beschreibt einen virtuellen Schalter, um z.B. eine Heckklappe oder eine Tür eines Fahrzeugs zu betätigen. Dabei entsteht bei der Signalisierung einer Absicht der Betätigung ein vorgegebenes Bewegungsmuster. Umweltbedingte Fehlauslösungen können dabei verhindert werden.

Die DE 10 2005 032 402 B3 offenbart eine Annäherungsdetektion einer Person an ein Fahrzeug. Wird dabei ein Bewegungsmuster erkannt, wird ein Steuerbefehl (z.B. das Öffnen eines Heckdeckels) ausgelöst. Erfassungskeulen können dabei abhängig von einem Abstand zwischen dem Fahrzeug und anderen Objekten geändert werden.

Bei einem Einsatz von mittels Gestik gesteuerten Schließvorrichtungen zum Öffnen und Schließen von Türen und Klappen eines Fahrzeugs werden Bewegungen von Objekten (beispielsweise Händen oder Füßen) ausgewertet. Dabei werden die Türen und Klappen nur betätigt, wenn die Bewegung des entsprechenden Objekts als gültig bewertet wird. Gerade bei Regen, in Waschstraßen oder beim Einsatz von Hochdruckreinigern kommt es nach dem Stand der Technik bei diesen Schließvorrichtungen häufig zu Fehlauslösungen.

Daher stellt sich die vorliegende Erfindung die Aufgabe, bei solchen Schließvorrichtungen die Wahrscheinlichkeit von Fehlauslösungen zu verringern.

Erfindungsgemäß wird diese Aufgabe durch ein Verfahren zur automatischen Betätigung eines Schließelements nach Anspruch 1, durch eine Vorrichtung zur Betätigung eines Schließelements nach Anspruch 8 und durch ein Fahrzeug nach Anspruch 11 gelöst. Die abhängigen Ansprüche definieren bevorzugte und vorteilhafte Ausführungsformen der Erfindung.

Im Rahmen der vorliegenden Erfindung wird ein Verfahren zur automatischen Betätigung eines Schließelements eines Fahrzeugs bereitgestellt. Dabei werden Umfeldbedingungen in einem Umgebungsbereich des Fahrzeugs erfasst. Darüber hinaus wird eine Bewegung eines Objekts in dem Umgebungsbereich des Fahrzeugs erfasst. Die erfasste Bewegung wird mit einem vorgegebenen Bewegungsprofil verglichen. Wenn die erfasste Bewegung dem vorgegebenen Bewegungsprofil entspricht, wird das Schließelement automatisch betätigt. Dabei erfolgt das Erfassen der Bewegung des Objekts in dem Umgebungsbereich und/oder der Vergleich der erfassten Bewegung mit dem vorgegebenen Bewegungsprofil abhängig von den erfassten Umfeldbedingungen.

Indem das Erfassen der Bewegung des Objekts und/oder der Vergleich der erfassten Bewegung mit dem vorgegebenen Bewegungsprofil abhängig von den erfassten Umfeldbedingungen erfolgt, kann das Erfassen der Bewegung des Objekts und/oder der Vergleich der erfassten Bewegung mit dem vorgegebenen Bewegungsprofil an die aktuellen Umfeldbedingungen oder besser an die Stärke einer Umfeldbeeinflussung, mit welcher die aktuellen Umfeldbedingungen das Erfassen der Bewegung des Objekts und/oder den Vergleich der erfassten Bewegung mit dem vorgegebenen Bewegungsprofil negativ beeinflussen, angepasst werden. Dabei werden unter Umfeldbedingungen beispielsweise Niederschläge, Temperatur und Lichtverhältnisse verstanden.

Die Erfassung der Bewegung des Objekts im Umgebungsbereich erfolgt insbesondere nur dann, wenn gleichzeitig ein dem Fahrzeug zugeordneter Fahrzeugschlüssel (z.B. Funkschlüssel für ein Keyless-Entry- bzw. Keyless-Go-System) in dem Umgebungsbereich erfasst wird. Beispielsweise kann einem Sensorsystem, mit welchem die Bewegung des Objekts erfasst wird, die Anwesenheit eines für das Fahrzeug autorisierten Schlüssels bei einer erkannten Annäherung mitgeteilt werden. Dadurch kann das Sensorsystem besser zwischen erfassten Unruhen (Bewegungen) bei einem abgestellten Fahrzeug, welche zu ignorieren sind, und versuchten Bewegungen zur Betätigung des Schließelements unterscheiden.

Unter einem Schließelement wird beispielsweise eine Tür (einschließlich Schiebetür), eine Klappe (z.B. Kofferraumklappe), ein Fenster oder ein Schiebedach des Fahrzeugs verstanden.

Bei der Betätigung des Schließelements handelt es sich insbesondere um ein Öffnen des Schließelements, wenn das Schließelement geschlossen ist, und um ein Schließen des Schließelements, wenn das Schließelement geöffnet ist.

Die Anpassung des Erfassens der Bewegung des Objekts in dem Umgebungsbereich und/oder der Vergleich der erfassten Bewegung mit dem vorgegebenen Bewegungsprofil an die erfassten Umfeldbedingungen kann dabei wie folgt vorgenommen werden:
- Ein Parameter des vorgegebenen Bewegungsprofils kann in Abhängigkeit von den Umfeldbedingungen eingestellt werden. Wenn das vorgegebene Bewegungsprofil beispielsweise als Parameter einen Referenz-Schwellenwert umfasst, welcher von einem Ausgabewert eines Sensors (z. B. eines kapazitiven Sensors), mit welchem die Bewegung erfasst wird, überschritten werden muss, kann dieser Schwellenwert umso größer eingestellt werden, je stärker die Umfeldbedingungen den entsprechenden Sensor beeinflussen. Wenn mit dem Sensor beispielsweise eine Geste (z. B. eine Kickbewegung) zu erfassen ist, muss diese Geste umso näher an dem Sensor ausgeführt werden, je stärker die Umfeldbedingungen den Sensor negativ beeinflussen.
- Ein erster Algorithmus, mit welchem die Bewegung des Objekts erfasst wird, kann in Abhängigkeit von den Umfeldbedingungen ausgewählt werden. Mit anderen Worten werden nicht nur die Parameter dieses ersten Algorithmus abhängig von den Umfeldbedingungen geändert, sondern der Algorithmus wird abhängig von den Umfeldbedingungen aus einer Menge vorbestimmter Algorithmen zum Erfassen der Bewegung des Objekts ausgewählt, um mit einem speziell für die aktuell geltenden Umfeldbedingungen möglichst robusten Algorithmus zu arbeiten. Beispielsweise können die Ausgangswerte eines Sensors zum Erfassen der Bewegung des Objekts bei einer geringen Beeinflussung durch die Umfeldbedingungen mit einem einfachen Filter gefiltert werden, während die Ausgangswerte des Sensors bei einer starken Beeinflussung durch die Umfeldbedingungen mit einem komplexen Filter (vorzugsweise mit einem FIR-Filter ("Finite Impuls Response" (Filter mit endlicher Impulsantwort)) gefiltert werden. Darüber hinaus ist es denkbar, dass zur Erfassung der Bewegung in Abhängigkeit von den Umfeldbedingungen bestimmte Sensoren unterschiedlich berücksichtigt werden. Beispielsweise können optische Sensoren im Vergleich zu kapazitiven Sensoren bei Helligkeit zur Erfassung der Bewegung des Objekts stärker berücksichtigt werden.
- Ein zweiter Algorithmus, mit welchem der Vergleich der erfassten Bewegung mit dem vorgegebenen Bewegungsprofil durchgeführt wird, kann in Abhängigkeit von den Umfeld bedingungen ausgewählt werden. Ähnlich wie bei dem ersten Algorithmus wird demnach der zweite Algorithmus abhängig von den aktuellen Umfeld bedingungen aus einer Menge vorbestimmter Algorithmen zum Vergleichen der erfassten Bewegung mit dem vorgegebenen Bewegungsprofil ausgewählt, um diesen Vergleich mit einem gerade für die aktuell geltenden Umfeldbedingungen möglichst optimal arbeitenden Algorithmus durchzuführen. Beispielsweise ist es denkbar, dass bei einer geringen Beeinflussung des Sensors durch die Umfeldbedingungen ein bestimmter zweiter Algorithmus eingesetzt wird, welcher die erfasste Bewegung sowohl mit einem Bewegungsprofil für eine Hand als auch mit einem Bewegungsprofil für einen Fuß vergleicht. Dagegen könnte bei einer starken Beeinflussung durch die Umfeldbedingungen mit einem anderen zweiten Algorithmus gearbeitet werden, welcher die erfasste Bewegung nur mit einem Bewegungsprofil für den Fuß vergleicht.

Insbesondere durch die umgebungsabhängige Behandlung der Sensordaten, wie z.B. der Einsatz angepasster Erkennungsparameter bei unruhigen Umfeldbedingungen, vermindert die Wahrscheinlichkeit einer Fehlauslösung.

Die Bewegung des Objekts wird mit Hilfe eines ersten Sensors des Fahrzeugs erfasst, während die Umfeldbedingungen mit einem zweiten Sensor des Fahrzeugs erfasst werden. Dabei werden Ausgangswerte des zweiten Sensors über ein vorbestimmtes Zeitinterval gemittelt, um einen Mittelwert zu erzeugen. Das Zeitinterval endet dabei jeweils zum Zeitpunkt, zu welchem die Bewegung des Objekts erfasst wird. Ein Mindestschwellenwert, welcher von einem Ausgangswert des ersten Sensors überschritten werden muss, damit die erfasste Bewegung als dem vorgegebenen Bewegungsprofil entsprechend erkannt wird, wird dabei umso größer gewählt, je größer der Mittelwert ist.

Mit diesem Mittelwert wird ein Unruhemaß definiert, welches unter normalen Umweltbedingungen nur geringe Werte annimmt und bei von der Normalität abweichenden Umweltbedingungen höhere Werte annimmt, so dass der Wert bzw. Mittelwert Rückschlüsse auf die Stärke einer negativen Beeinflussung durch die Umwelt erlaubt.

Bei dem zweiten Sensor kann es sich dabei beispielsweise um einen Regensensor handeln, dessen Ausgangswert umso größer ist, je größer die von dem Regensensor erfasste Regenmenge pro Zeiteinheit ist. Da die Auswertung des ersten Sensors umso stärker negativ beeinflusst wird, je stärker es regnet, ist es vorteilhaft, den Mindestschwellenwert entsprechend anzupassen, um unabhängig von der Stärke des Regens eine Fehlauslösung zu vermeiden. In ähnlicher Weise kann als zweiter Sensor auch ein Lichtsensor oder ein Temperatursensor eingesetzt werden, wobei auch eine Kombination mehrerer Sensoren (z.B. Lichtsensor und Regensensor) möglich ist. Darüber hinaus kann es sich bei dem ersten Sensor und bei dem zweiten Sensor auch um denselben Sensor handeln, welcher demnach sowohl die Bewegung des Objekts als auch die Umfeldbedingungen erfasst.

Gleichartige Sensoren für den ersten und zweiten Sensor können durch eine entsprechende beabstandete Anordnung am Fahrzeug Umfeldbedingungen besser erkennen, als wenn der erste Sensor von einem anderen Sensortyp ist als der zweite Sensor. Wenn der erste und der zweite Sensor beispielsweise jeweils ein kapazitiver Sensor ist, wobei der erste Sensor an der Außenhülle des Fahrzeugs und der zweite Sensor unterhalb des Fahrzeugs (z.B. jeweils am Heckbereich des Fahrzeugs) angebracht ist, weist der erste Sensor bei Regen höhere Ausgangswerte und der zweite Sensor bei einer Unterbodenwäsche (in der Waschstraße) höhere Ausgangswerte auf. Als Regel kann in diesem Fall beispielsweise abgeleitet werden, dass störende Umfeldbedingungen vorliegen, wenn die Ausgangswerte des einen Sensors über ein vorbestimmtes Zeitintervall hinweg höher sind als die Ausgangswerte des anderen Sensors.

Beispielsweise ist es auch möglich eine Güte eines Filters, mit welchem der erste Algorithmus die Ausgangswerte des ersten Sensors filtert, umso höher einzustellen, je größer der von den Ausgangswerten des zweiten Sensors erzeugte Mittelwert ist.

Anders ausgedrückt wird die Güte des Filters (d.h. das Verhältnis von Mittenfrequenz zu Bandbreite des Filters) umso höher eingestellt, je stärker die Umfeldbedingungen die Erfassung der Bewegung des Objekts negativ beeinflussen.

Der Mittelwert, welcher als ein Unruhemaß der Umfeldbedingungen anzusehen ist, wird insbesondere nach einem Zündungswechsel des Fahrzeugs neu bestimmt.

Ein Zündungswechsel liegt vor, wenn die Zündung des Fahrzeugs eingeschaltet oder ausgeschaltet wird. Da ein Verlassen des Fahrzeugs häufig dem Zündungswechsel (insbesondere dem Ausschalten der Zündung) folgt,

Da der Zündungswechsel (insbesondere das Ausschalten der Zündung) einem Ende einer Fahrt des Fahrzeugs folgt, ist es vorteilhaft, den Mittelwert nach dem Zündungswechsel neu zu berechnen, da sich die Umfeldbedingungen beim Stillstand des Fahrzeugs im Vergleich zur Fahrt des Fahrzeugs ändern. Anders ausgedrückt werden Langzeitwirkungen durch die Neuberechnung des Unruhemaßes eliminiert. Da das Unruhemaß bzw. der Mittelwert nach dem Zündungswechsel neu bestimmt wird, steht das neue Unruhemaß erst eine vorbestimmte Zeitspanne nach dem Zündungswechsel zur Verfügung.

Im Detail existieren folgende drei Fälle:
- Der zeitliche Abstand zwischen dem Zündungswechsel und dem Zeitpunkt, zu welchem die Bewegung des Objekts erfasst wird, liegt unterhalb der vorbestimmten Zeitspanne. In diesem Fall wird kein Unruhemaß bestimmt, so dass eine erfindungsgemäße Betätigung des Schließelements nicht möglich ist.
- Der zeitliche Abstand zwischen dem Zündungswechsel und dem Zeitpunkt, zu welchem die Bewegung des Objekts erfasst wird, ist nicht kleiner als die vorbestimmte Zeitspanne aber nicht größer als das vorbestimmte Zeitinterfall. In diesem Fall wird das Unruhemaß bzw. der Mittelwert vom Zündungswechsel bis zum Zeitpunkt, zu welchem die Bewegung des Objekts erfasst wird, berechnet.
- Der zeitliche Abstand zwischen dem Zündungswechsel und dem Zeitpunkt, zu welchem die Bewegung des Objekts erfasst wird, ist größer als das vorbestimmte Zeitinterfall. In diesem Fall wird das Unruhemaß innerhalb des vorbestimmten Zeitintervalls berechnet, welches zum Zeitpunkt, zu welchem die Bewegung des Objekts erfasst wird, endet.

Wenn die Ausgangswerte des Sensors, mit welchem die Umfeldbedingungen erfasst werden, über einem vorbestimmten Maximalschwellenwert liegen, kann es vorteilhaft sein, eine Betätigung des Schließelements für eine vorbestimmte Zeitdauer zu deaktivieren.

Wenn die Umfeldbedingungen die Erfassung der Bewegung des Objekts in dem Umgebungsbereich und/oder den Vergleich der erfassten Bewegung mit dem vorgegebenen Bewegungsprofil zu stark negativ beeinflussen, ist die Deaktivierung der automatischen Betätigung des Schließelements ein probates Mittel, Fehlauslösungen des Schließelements aufgrund der Umfeldbedingungen zu vermeiden.

Erfindungsgemäß kann die Bewegung des Objekts in dem Umgebungsbereich mit Hilfe eines optischen Sensors oder mit Hilfe eines kapazitiven Sensors erfasst werden. Wenn die Bewegung des Objekts in dem Umgebungsbereich mittels eines optischen Sensors erfasst wird und wenn die erfassten Umfeldbedingungen einen optischen Kontrast anzeigen, welcher unter einem vorgegebenen Kontrastschwellenwert liegt, kann es vorteilhaft sein, eine Verstärkung, mit welcher ein Ausgangssignal des optischen Sensors verstärkt wird, zu erhöhen oder eine Lichtquelle des Fahrzeugs zu aktivieren, um das Objekt besser auszuleuchten.

Bei optischen Sensoren spielt die Erkennung von Hindernissen, einer Betauung, von Salzwasser und von Schmutzbelegen sowie von unterschiedlichen Lichtverhältnissen eine wesentliche Rolle bei der Bewertung der Umfeldeinflüsse bzw. Umfeldbedingungen. Bei schlechten Lichtverhältnissen (d.h. der Kontrast liegt unter dem Kontrastschwellenwert) können reflektionsarme Gegenstände vorteilhafterweise dennoch von dem optischen Sensor erfasst werden, wenn die Verstärkung des Sensors erhöht oder eine zusätzliche Lichtquelle zur Beleuchtung des Gegenstands aktiviert wird.

Gemäß einer erfindungsgemäßen Ausführungsform wird ein Zähler inkrementiert, wenn die erfasste Bewegung nicht dem vorgegebenen Bewegungsprofil entspricht. Dieser Zähler wird beispielsweise auf Null zurückgesetzt, wenn ein Zündungswechsel stattfindet, wenn kein für das Fahrzeug berechtigter Schlüssel erfasst wird oder wenn die erfasste Bewegung dem vorgegebenen Bewegungsprofil entspricht. Wenn der Zählerwert des Zählers einen vorbestimmten Schwellenwert übersteigt, wird eine optische und/oder akustische Warnung (beispielsweise mit Leuchten des Fahrzeugs oder der Hupe des Fahrzeugs) ausgegeben, um den Fahrer des Fahrzeugs zu informieren, dass aufeinanderfolgend mehrere Fehlversuche (oder als fehlerhafte Bewegung erfasste Umfeldbedingungen) erfasst worden sind.

Bei besonders stark störenden Umfeldbedingungen kann das Unruhemaß Ausmaße annehmen, welcher oberhalb einer Schranke liegen. Auch dies kann dem Fahrer vorteilhafterweise durch optische und/oder akustische Hinweise mitgeteilt werden, da in diesem Fall zumindest mit Störungen bei der erfindungsgemäßen Betätigung des Schließelements zu rechnen ist.

Im Rahmen der vorliegenden Erfindung wird auch eine Vorrichtung zur Betätigung eines Schließelements eines Fahrzeugs bereitgestellt. Dabei umfasst die Vorrichtung einen Mechanismus zur automatischen Betätigung des Schließelements, ein Steuergerät und einen oder mehrere Sensoren. Das Steuergerät erfasst mit Hilfe des einen oder der mehreren Sensoren Umfeldbedingungen im Umgebungsbereich des Fahrzeugs. Darüber hinaus erfasst das Steuergerät mit Hilfe des einen oder der mehreren Sensoren eine Bewegung eines Objekts in dem Umgebungsbereich des Fahrzeugs. Das Steuergerät vergleicht die erfasste Bewegung mit einem vorgegebenen Bewegungsprofil, welches beispielsweise in einem Speicher der Vorrichtung gespeichert ist. Das Steuergerät steuert den Mechanismus zur automatischen Betätigung des Schließelements an, wenn das Steuergerät erkennt, dass die erfasste Bewegung dem Bewegungsprofil entspricht. Dabei erfolgt das Erfassen der Bewegung des Objekts in dem Umgebungsbereich durch das Steuergerät und/oder der Vergleich der erfassten Bewegung mit dem Bewegungsprofil durch das Steuergerät abhängig von den erfassten Umfeldbedingungen.

Die Vorteile der erfindungsgemäßen Vorrichtung entsprechen im Wesentlichen den Vorteilen des erfindungsgemäßen Verfahrens, welche vorab im Detail erläutert worden sind, so dass hier auf eine Wiederholung verzichtet wird.

Erfindungsgemäß ist es möglich, dass ein und derselbe Sensor der Vorrichtung eingesetzt wird, um sowohl die Umfeldbedingungen als auch die Bewegung des Objekts zu erfassen. Es ist auch möglich, dass beim Einsatz von mehreren Sensoren der Vorrichtung jeder dieser Sensoren sowohl die Umfeldbedingungen als auch die Bewegung des Objekts erfasst.

Es ist erfindungsgemäß allerdings auch denkbar, dass die Vorrichtung einen oder mehrere Sensoren umfasst, um mit diesen die Bewegung des Objekts zu erfassen, und dass die Vorrichtung einen oder mehrere andere Sensoren umfasst, um mit diesen die Umfeldbedingungen zu erfassen.

Als Sensor sowohl zum Erfassen der Bewegung des Objekts als auch zum Erfassen der Umfeldbedingungen kann dabei insbesondere ein optischer Sensor oder ein kapazitiver Sensor eingesetzt werden. Allerdings ist auch der Einsatz eines thermischen Sensors, eines InfrarotSensors, eines Ultraschall-Sensors oder auch einer Kamera denkbar. Auch eine Kombination von Sensoren verschiedener Typen und eine vernetzte Struktur von Sensoren sind vorstellbar.

Schließlich wird im Rahmen der vorliegenden Erfindung ein Fahrzeug bereitgestellt, welches ein Schließelement und eine erfindungsgemäße Vorrichtung umfasst.

Die Erfindung ermöglicht vorteilhafterweise eine gezielte ursachengebundene Unterbindung von Fehlauslösungen.

Die vorliegende Erfindung ist insbesondere zur Betätigung eines Schließelements eines Kraftfahrzeugs geeignet. Selbstverständlich ist die vorliegende Erfindung nicht auf diesen bevorzugten Anwendungsbereich eingeschränkt, da die vorliegende Erfindung auch bei Schiffen, Flugzeugen sowie gleisgebundenen oder spurgeführten Fahrzeugen einsetzbar ist.

Im Folgenden wird die vorliegende Erfindung anhand bevorzugter erfindungsgemäßer Ausführungsformen mit Bezug zu den Figuren im Detail beschrieben.

In Fig. 1 sind Funktionsblöcke eines erfindungsgemäßen Verfahrens dargestellt.

Fig. 2 zeigt ein erfindungsgemäßes Fahrzeug mit einer erfindungsgemäßen Vorrichtung.

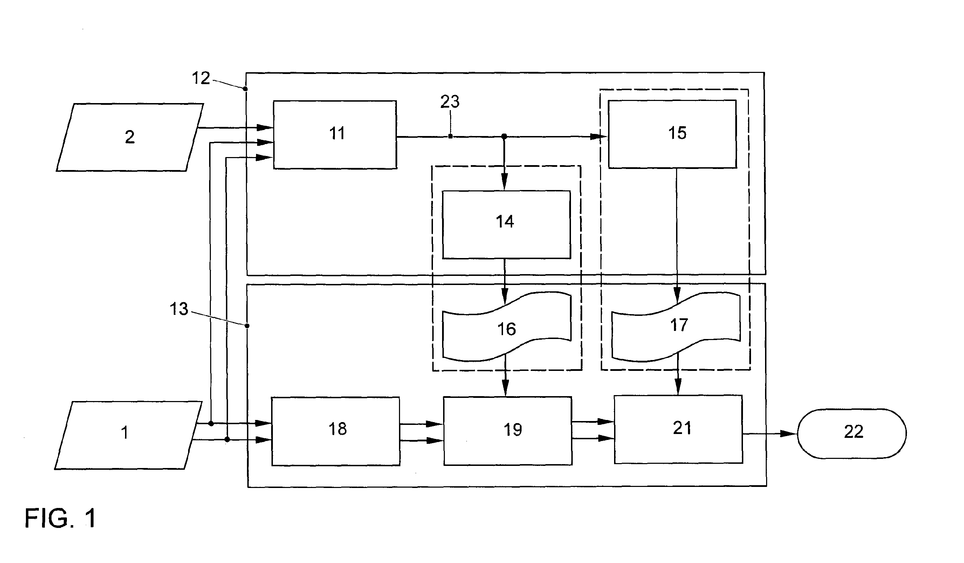

In Fig. 1 sind Funktionsblöcke dargestellt, welche zur Durchführung des erfindungsgemäßen Verfahrens ausgeführt werden müssen. Man erkennt, dass erfindungsgemäß zwischen einer Umgebungsanalyse 12 und einer Bewegungsanalyse (hier Kickanalyse oder Analyse einer Standgeste) 13 unterschieden wird. Dabei beeinflusst die Umgebungsanalyse 12 die Bewegungsanalyse 13, wie es im Folgenden noch im Detail beschrieben wird.

Eine Kickgeste, welche mit einer Kickanalyse analysiert wird, umfasst insbesondere eine Hin- und Rückbewegung beispielsweise des Fußes. Zum Unterschied dazu umfasst eine Standgeste nur das Abstellen eines Objektes (z.B. des Fußes) an einer bestimmten Stelle relativ zum Fahrzeug (z.B. mittig unterhalb der hinteren Stoßstange).

Über eine Zusatzsensorik 2 werden Umfeldbedingungen (z.B. Regen, Licht und Temperatur) erfasst und an eine Umgebungserkennung 11 gesendet, welche zusätzlich Sensordaten von zwei Bewegungssensoren 1 erhält. Die Umgebungserkennung 11 kann beispielsweise eine Regenstärke bestimmen oder erkennen, ob sich das Fahrzeug in einer Waschstraße befindet oder von einem Hochdruckreiniger gereinigt wird. Die Umgebungserkennung 11 gibt die von ihr ermittelten Umfelddaten 23 zur Parameteranpassung 14 und zur Einstellung eines Validierungsmodus 15 weiter.

Die Bewegungssensoren 1 übermitteln ihre Sensordaten auch an eine Vorverarbeitung bzw. Rauschminderung 18, welche insbesondere eine Filterung der Sensordaten durchführt und die gefilterten Sensordaten an eine Bewegungserkennung (hier Kickerkennung) 19 weiterleitet. Die Kickerkennung arbeitet dabei mit den Parametern 16 (beispielsweise einer Kickgüte oder einem Toleranzmaß), welche über die Parameteranpassung 14 an die aktuellen Umfeldbedingungen angepasst worden sind. Wenn die Kickerkennung 19 in den Sensordaten einen Kick erkennt, werden die entsprechend aufbereiteten Sensordaten an die Kickvalidierung 21 weitergereicht. Die Kickvalidierung 21 überprüft mit den Validierungsparametern 17, ob der erfasste Kick einem vorgegebenen Bewegungsprofil entspricht. Wenn dies der Fall ist, wird eine von dem Kick abhängige Funktion 22 des Fahrzeugs 10 aktiviert. Dabei sind die Validierungsparameter 17 zum einen von den aktuellen Umfeldbedingungen und zum anderen von den Einstellungen des Validierungsmodus 15, welche das vorgegebene Bewegungsprofil umfassen, abhängig, wobei die aktuell gewählten Einstellungen des Validierungsmodus 15 ebenfalls von den aktuellen Umfeldbedingungen abhängig sind. Beispielsweise bestimmen die Einstellungen des Validierungsmodus 15, ob die Kickvalidierung 21 mit einem Sensor oder mit mehreren (im dargestellten Fall mit zwei Sensoren 1) durchgeführt wird. Die Einstellungen des Validierungsmodus 15 geben über das Bewegungsprofil vor, ob ein einfacher Kick oder ein doppelter Kick zur Aktivierung der Funktion 22 notwendig ist. Auch eine Sperrung der Funktionsaktivierung 22 (einschließlich einer Sperrdauer) bei zu schlechten Umfeldbedingungen kann über die Einstellungen des Validierungsmodus 15 erfolgen, indem die Kickvalidierung angewiesen wird, die Funktion unabhängig von den Ergebnissen der Kickerkennung 19 nicht zu aktivieren.

Das in Fig. 1 dargestellte Ausführungsbeispiel sieht vor, dass die Umgebungsanalyse 12 parallel (gleichzeitig) mit der Bewegungsanalyse 13 ausgeführt wird. Wird über die Sensoren 1, 2 beispielsweise Regen mit einer geringen Stärke erkannt, kann die Bewegungsanalyse 13 normal arbeiten. Ab einer definierten von den Sensoren 1, 2 erfassten Regenstärke werden die Bewilligungsparameter 16 entsprechend angepasst und eine optimierte Bewegungsvalidierung 21 durchgeführt, so dass zusätzliche Anforderungen an die Bewegungserkennung bzw. Bewegungsanalyse 13 gestellt werden können.

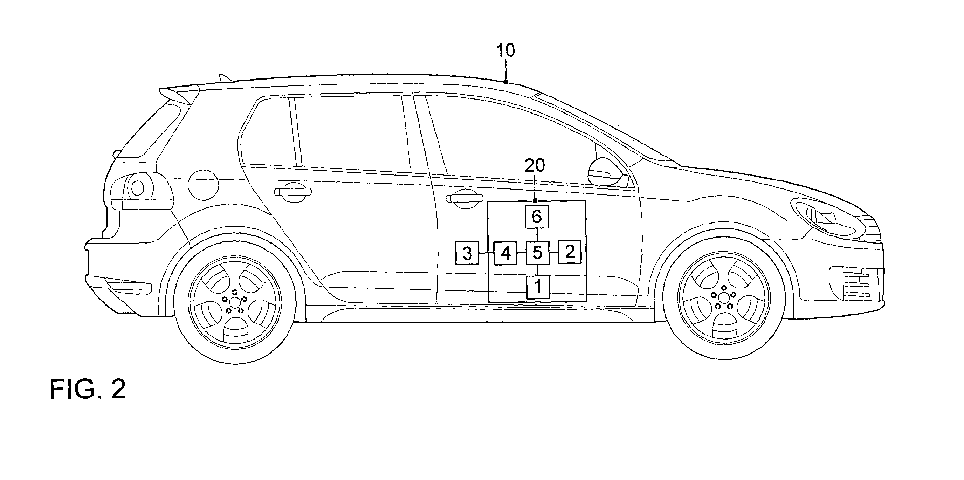

In Fig. 2 ist ein erfindungsgemäßes Fahrzeug 10 dargestellt, welches eine erfindungsgemäße Vorrichtung 20 und ein Schließelement 3 (beispielsweise eine Tür) des Fahrzeugs 10 umfasst. Die erfindungsgemäße Vorrichtung 20 umfasst ihrerseits ein Steuergerät 5, einen Bewegungssensor 1, einen Umfeldsensor 2, einen Mechanismus 4 zur Betätigung des Schließelements 3 und einen Speicher 6 zur Speicherung eines Bewegungsprofils. Wenn das Steuergerät 5 über den Bewegungssensor 1 eine Bewegung erfasst, vergleicht es die erfasste Bewegung mit dem im Speicher 6 gespeicherten Bewegungsprofil. Dabei wird sowohl die Erfassung der Bewegung als auch der Vergleich der Bewegung mit dem Bewegungsprofil abhängig von Umfeldbedingungen durchgeführt, welche mittels des Umfeldsensors 2 in der Umgebung des Fahrzeugs 10 erfasst worden sind. Wenn die erfasste Bewegung in bestimmten Toleranzgrenzen, welche insbesondere abhängig von den aktuell erfassten Umfeldbedingungen sind, dem Bewegungsprofil entspricht, betätigt das Steuergerät 5 mit Hilfe des Mechanismus 4 das Schließelement 3.

Wenn eine Anzahl von Vergleichen der Bewegungen mit dem Bewegungsprofil aufeinanderfolgend zu dem Ergebnis kommt, dass die Bewegung dem Bewegungsprofil nicht entspricht, dann kann die erfindungsgemäße Vorrichtung eine optische und/oder akustische Rückmeldung ausgeben, um z.B. den Fahrer des Fahrzeugs darüber zu informieren.

Im Folgenden wird die vorliegende Erfindung mit Hilfe von verschiedenen Anwendungsfällen nochmals beispielhaft erläutert.

### Erster Anwendungsfall

Ein Fahrer fährt mit dem erfindungsgemäßen Fahrzeug 10 im Regen. Der Fahrer stoppt das Fahrzeug 10, schaltet die Zündung des Fahrzeugs 10 aus und verlässt das Fahrzeug 10. Anschließend öffnet er mittels einer Kickbewegung den Kofferraumdeckel des Fahrzeugs 10. Durch den Zündungswechsel bzw. das Ausschalten der Zündung wird das Unruhemaß, mit welchem die Umweltbedingungen erfasst werden, verworfen und ab dem Zeitpunkt des Zündungswechsels neu berechnet. Erst nach einer vorbestimmten Zeitspanne (beispielsweise 4 s) steht das neue Unruhemaß (z.B. der neue Mittelwert der Ausgangswerte des Umfeldsensors 2 zur Verfügung), so dass frühestens nach dieser vorbestimmten Zeitspanne nach dem Zündungswechsel der Kofferraum (oder ein anderes Schließelement des Fahrzeugs 10) von dem Fahrer geöffnet werden kann. Sowohl die Erfassung der Kickbewegung als auch der Vergleich der erfassten Kickbewegung mit dem vorgegebenen Bewegungsprofil erfolgt abhängig von dem Unruhemaß. Eine wie auch immer geartete Gestik des Fahrers vor Ablauf der vorbestimmten Zeitspanne wird von dem erfindungsgemäßen Verfahren ignoriert und führt nicht zur Betätigung eines Schließelements des Fahrzeugs 10.

Die Neuberechnung des Unruhemaßes nach dem Zündungswechsel hat den Vorteil, dass das neu berechnete Unruhemaß nur die Stärke des Regens im Stillstand des Fahrzeugs 10 widerspiegelt (d.h. die von dem Unruhemaß erfasste Stärke des Regens wird vorteilhafterweise durch die Fahrgeschwindigkeit des Fahrzeugs 10 nicht mehr beeinflusst).

### Zweiter Anwendungsfall

Ein Fahrer nähert sich dem erfindungsgemäßen Fahrzeug 10 und öffnet eine Tür des Fahrzeugs 10 mit einer Kickbewegung.

In diesem Fall wird das Unruhemaß (z.B. Mittelwert der Ausgangswerte des Umfeldsensors 2) über ein vorbestimmtes Zeitinterval (beispielsweise 30 s), welches zum Zeitpunkt der Kickbewegung endet, berechnet. Somit reflektiert das Unruhemaß die Umfeldbedingungen des Fahrzeugs 10 im letzten vorbestimmten Zeitinterval und bietet daher einen besonderen Schutz vor Fehlauslösungen unter schweren Umwelteinflüssen, indem sowohl die Erfassung der Kickbewegung des Fahrers als auch der Vergleich der erfassten Kickbewegung mit dem vorgegebenen Bewegungsprofil abhängig von dem Unruhemaß erfolgt.

### Dritter Anwendungsfall

Der Fahrer durchfährt mit dem erfindungsgemäßen Fahrzeug 10 eine Waschstraße, schaltet die Zündung des Fahrzeugs 10 nach dem Verlassen der Waschstraße aus und verlässt das Fahrzeug 10. Anschließend öffnet der Fahrer mittels einer Standbewegung oder Kickbewegung den Kofferraum des Fahrzeugs.

Durch den Zündungswechsel (Ausschalten der Zündung) wird das Unruhemaß verworfen und ab dem Zeitpunkt des Zündungswechsels neu berechnet. Ähnlich wie bei dem ersten
Anwendungsfall steht das neue Unruhemaß erst nach Ablauf der vorbestimmten Zeitspanne zur Verfügung, so dass der Fahrer erst dann den Kofferraum (oder ein anderes Schließelement des Fahrzeugs 10) mit der Standbewegung oder Kickbewegung öffnen kann. Sowohl die Erfassung der Standbewegung oder Kickbewegung als auch der Vergleich der erfassten Standbewegung oder Kickbewegung mit dem vorgegebenen Bewegungsprofil erfolgt in Abhängigkeit von dem neu berechneten Unruhemaß.

Die Neuberechnung des Unruhemaßes nach dem Zündungswechsel hat in diesem Anwendungsfall den Vorteil, dass das neu berechnete Unruhemaß nicht durch die Umfeldbedingungen innerhalb der Waschstraße beeinflusst wird, da das neue Unruhemaß erst nach dem Zündungswechsel, welcher nach dem Verlassen der Waschstraße erfolgte, neu berechnet wurde.

### Vierter Anwendungsfall

Der Fahrer reinigt das erfindungsgemäße Fahrzeug 10 mit einem Hochdruckreiniger und führt dabei versehentlich einer Kickbewegung vor einer Tür des Fahrzeugs 10 aus.

Da in diesem Fall kein Zündungswechsel vorliegt, wird das Unruhemaß (z. B. Mittelwert der Ausgangswerte des Umfeldsensors 2) über das vorbestimmte Zeitinterval bis zum Zeitpunkt der Kickbewegung berechnet. Das Unruhemaß umfasst demnach die extremen Umfeldbedingungen aufgrund der Hochdruckreinigung, so dass das Unruhemaß bzw. Ausgangswerte des Umfeldsensors 2 über einem Maximalschwellenwert liegen, was dazu führt, dass die erfindungsgemäße Betätigung der Tür deaktiviert ist. Mit anderen Worten öffnet sich die Tür bei diesem Anwendungsfall vorteilhafterweise nicht, obwohl der Fahrer versehentlich die Kickbewegung vor der Tür ausgeführt hat.

## Patentansprüche

1. Verfahren zur automatischen Betätigung eines Schließelements (3) eines Fahrzeugs (10), wobei Umfeldbedingungen in einem Umgebungsbereich des Fahrzeugs (10) erfasst werden,
wobei eine Bewegung eines Objekts in dem Umgebungsbereich des Fahrzeugs (10) erfasst wird,
wobei die erfasste Bewegung mit einem vorgegebenen Bewegungsprofil verglichen wird, wobei, wenn die erfasste Bewegung dem vorgegebenen Bewegungsprofil entspricht, das Schließelement (3) automatisch betätigt wird,
wobei das Erfassen der Bewegung des Objekts in dem Umgebungsbereich und/oder der Vergleich der erfassten Bewegung mit dem vorgegebenen Bewegungsprofil abhängig von den erfassten Umfeldbedingungen erfolgt,
dadurch gekenzeichnet, dass
ein erster Sensor (1) des Fahrzeugs (10) die Bewegung des Objekts erfasst, dass
ein zweiter Sensor (2) des Fahrzeugs (10) die Umfeldbedingungen erfasst, dass
ein Ausgangswert des zweiten Sensors (2) über ein vorbestimmtes Zeitintervall, welches zum Zeitpunkt der Erfassung der Bewegung des Objekts endet, gemittelt wird, um einen Mittelwert zu erzeugen, und dass
ein Schwellenwert, welcher von einem Ausgangswert des ersten Sensors (1) überschritten werden muss, damit die erfasste Bewegung als dem vorgegebenen Bewegungsprofil entsprechend erkannt wird, umso größer gewählt wird, je größer der Mittelwert ist.

2. Verfahren nach Anspruch 1, **dadurch gekennzeichnet, dass** das Erfassen der Bewegung des Objekts in dem Umgebungsbereich und/oder der Vergleich der erfassten Bewegung mit dem vorgegebenen Bewegungsprofil abhängig von den erfassten Umfeldbedingungen erfolgt,
• indem ein Parameter (16) des vorgegebenen Bewegungsprofils abhängig von den Umfeldbedingungen angepasst wird, und/oder
• indem ein erster Algorithmus (18), mit welchem die Bewegung des Objekts erfasst wird, abhängig von den Umfeldbedingungen gewählt wird, und/oder
• indem ein zweiter Algorithmus (15), mit welchem der Vergleich der erfassten Bewegung mit dem vorgegebenen Bewegungsprofil durchgeführt wird, abhängig von den Umfeldbedingungen gewählt wird.

3. Verfahren nach Anspruch 1 oder 2,
**dadurch gekennzeichnet,**
**dass** der erste Algorithmus ein Filtern der Ausgangswerte des ersten Sensors (1) umfasst, und
**dass** eine Güte des Filterns umso höher eingestellt wird, je größer der Mittelwert ist.

4. Verfahren nach einem der vorhergehenden Ansprüche, **dadurch gekennzeichnet, dass** nach einem Zündungswechsel des Fahrzeugs (10) der Mittelwert neu bestimmt wird.

5. Verfahren nach einem der vorhergehenden Ansprüche,
**dadurch gekennzeichnet,**
**dass** ein Sensor (2) des Fahrzeugs (10) die Umfeldbedingungen erfasst, und
**dass** eine Betätigung des Schließelements (3) für eine vorbestimmte Zeitdauer deaktiviert wird, wenn ein Ausgangswert des Sensors (2) über einem vorbestimmten Schwellenwert liegt.

6. Verfahren nach einem der vorhergehenden Ansprüche,
**dadurch gekennzeichnet,**
**dass** die Bewegung des Objekts in dem Umgebungsbereich mittels eines optischen Sensors (1) erfasst wird, und
**dass**, wenn die erfassten Umfeldbedingungen einen optischen Kontrast anzeigen, welcher unter einem Kontrastschwellenwert liegt, eine Verstärkung, mit welchen ein Ausgangssignal des optischen Sensors (1) verstärkt wird, erhöht wird, oder eine Lichtquelle des Fahrzeugs (10) aktiviert wird, um das Objekt zu beleuchten.

7. Verfahren nach einem der vorhergehenden Ansprüche,
**dadurch gekennzeichnet,**
**dass** eine Anzahl von Vergleichen bestimmt wird, bei welchen aufeinanderfolgend die erfasste Bewegung nicht dem vorgegebenen Bewegungsprofil entspricht, und
**dass** eine optische und/oder akustische Warnung am Fahrzeug (10) ausgegeben wird, wenn die Anzahl einen vorbestimmten Schwellenwert übersteigt.

8. Vorrichtung zur Betätigung eines Schließelements (3) eines Fahrzeugs (10),
wobei die Vorrichtung (20) einen Mechanismus (4) zur automatischen Betätigung des Schließelements (3), ein Steuergerät (5) und mindestens einen Sensor (1, 2) umfasst, wobei die Vorrichtung (20) ausgestaltet ist,
dass das Steuergerät (5) mit Hilfe des mindestens einen Sensors (1,2) Umfeldbedingungen in einem Umgebungsbereich des Fahrzeugs (10) erfasst,
dass das Steuergerät (5) mit Hilfe des mindestens einen Sensors (1, 2) eine Bewegung eines Objekts in dem Umgebungsbereich des Fahrzeugs (10) erfasst,
dass das Steuergerät (5) die erfasste Bewegung mit einem vorgegebenen Bewegungsprofil vergleicht,
dass das Steuergerät (5) den Mechanismus (4) zur automatischen Betätigung des Schließelements (3) ansteuert, wenn das Steuergerät (5) erkennt, dass die erfasste Bewegung dem Bewegungsprofil entspricht, und
dass das Steuergerät (5) das Erfassen der Bewegung des Objekts in dem Umgebungsbereich und/oder den Vergleich der erfassten Bewegung mit dem Bewegungsprofil abhängig von den erfassten Umfeldbedingungen vornimmt,
**dadurch gekennzeichnet, dass**
der mindestens eine Sensor einen ersten Sensor (1) zum Erfassen der Bewegung des Objekts und einen zweiten Sensor (2) zum Erfassen der Umfeldbedingungen umfasst, und dass
die Vorrichtung (20) ausgestaltet ist, um einen Ausgangswert des zweiten Sensors (2) über ein vorbestimmtes Zeitintervall, welches zum Zeitpunkt der Erfassung der Bewegung des Objekts endet, zu mitteln, um einen Mittelwert zu erzeugen, und um einen Schwellenwert, welcher von einem Ausgangswert des ersten Sensors (1) überschritten werden muss, damit die erfasste Bewegung als dem vorgegebenen Bewegungsprofil entsprechend erkannt wird, umso größer zu wählen, je größer der Mittelwert ist.

9. Vorrichtung nach Anspruch 8, **dadurch gekennzeichnet, dass** der mindestens eine Sensor einen Sensor umfasst, welcher sowohl die Umfeldbedingungen als auch die Bewegung des Objekts erfasst.

10. Vorrichtung nach Anspruch 8 oder 9, **dadurch gekennzeichnet, dass** die Vorrichtung (20) zur Durchführung des Verfahrens nach einem der Ansprüche 2-7 ausgestaltet ist.

11. Fahrzeug mit einem Schließelement (3) und mit einer Vorrichtung (20) nach einem der Ansprüche 8-10.

## Claims

1. Method for automatically actuating a closing element (3) of a vehicle (10), environmental conditions being detected in the surroundings of the vehicle (10), a movement of an object in the surroundings of the vehicle (10) being detected,
the detected movement being compared with a prescribed movement profile,
the closing element (3) automatically being actuated when the detected movement corresponds to the prescribed movement profile, and
the detection of the movement of the object in the surroundings, and/or the comparison of the detected movement with the prescribed movement profile being performed independently of the detected environmental conditions,
**characterized**
**in that** a first sensor (1) of the vehicle (10) detects the movement of the object,
**in that** a second sensor (2) of the vehicle (10) detects the environmental conditions,
**in that** an output value of the second sensor (2) is averaged over a predetermined time interval ending at the instant of the detection of the movement of the object, in order to produce a mean value, and
**in that** a threshold value which must be exceeded by an output value of the first sensor (1) so that the detected movement is appropriately recognized as the prescribed movement profile is selected to be greater the mean greater the value is.

2. Method according to Claim 1, **characterized in that** the detection of the movement of the object in the surroundings, and/or the comparison of the detected movement with the prescribed movement profile is performed as follows as a function of the detected environmental conditions:
• a parameter (16) of the prescribed movement profile is adjusted as a function of the environmental conditions, and/or
• a first algorithm (18), with which the movement of the object is detected, is selected as a function of the environmental conditions, and/or
• a second algorithm (15), with which the comparison of the detected movement with the prescribed movement profile is carried out, is selected as a function of the environmental conditions.

3. Method according to Claim 1 or 2,
**characterized**
**in that** the first algorithm comprises filtering of the output values of the first sensor (1), and
**in that** a filter quality is set to be higher the greater the mean value is.

4. Method according to one of the preceding claims, **characterized in that** the mean value is determined anew after an ignition changeover of the vehicle (10).

5. Method according to one of the preceding claims,
**characterized**
**in that** a sensor (2) of the vehicle (10) detects the environmental conditions, and
**in that** an actuation of the closing element (3) is deactivated for a predetermined time interval when an output value of the sensor (2) is above a predetermined threshold value.

6. Method according to one of the preceding claims,
**characterized**
**in that** the movement of the object in the surroundings is detected by means of an optical sensor (1), and
**in that** when the detected environmental conditions indicate an optical contrast which is below a contrast threshold value, a gain, with which an output signal of the optical sensor (1) is amplified, is increased, or a light source of the vehicle (10) is activated in order to illuminate the object.

7. Method according to one of the preceding claims,
**characterized**
**in that** a number of comparisons is determined for which the detected movement successively does not correspond to the prescribed movement profile and
**in that** an optical and/or acoustic warning is output on the vehicle (10) when the number exceeds a predetermined threshold value.

8. Device for actuating a closing element (3) of a vehicle (10),
the device (20) comprising a mechanism (4) for automatically actuating the closing element (3), a control unit (5) and at least one sensor (1, 2),
the configuration of the device (20) being such that the control unit (5) detects environmental conditions in the surroundings of the vehicle (10) with the aid of the at least one sensor (1, 2),
that the control unit (5) detects a movement of an object in the surroundings of the vehicle (10) with the aid of the at least one sensor (1, 2),
that the control unit (5) compares the detected movement with a prescribed movement profile,
that the control unit (5) drives the mechanism (4) for automatic actuation of the closing element (3) when the control unit (5) recognizes that the detected movement corresponds to the movement profile, and
that the control unit (5) undertakes to detect the movement of the object in the surroundings and/or to compare the detected movement with the movement profile as a function of the detected environmental conditions, **characterized**
**in that** the at least one sensor comprises a first sensor (1) for detecting the movement of the object and a second sensor (2) for detecting the environmental conditions,
and **in that** the device (20) is configured to average an output value of the second sensor (2) over a predetermined time interval which ends at the instant of the detection of the movement of the object, to produce a mean value and to select a threshold value, which must be exceeded by an output value of the first sensor (1), so that the detected movement is appropriately recognized as the prescribed movement profile, to be greater the greater the mean value is.

9. Device according to Claim 8, **characterized in that** the at least one sensor comprises a sensor which detects both the environmental conditions and the movement of the object.

10. Device according to Claim 8 or 9, **characterized in that** the device (20) is configured to carry out the method according to one of Claims 2-7.

11. Vehicle having a closing element (3) and having a device (20) according to one of Claims 8 - 10.

## Revendications

1. Procédé d'actionnement automatique d'un élément de fermeture (3) d'un véhicule (10), des conditions environnantes dans une zone environnante du véhicule (10) étant détectées,
un mouvement d'un objet dans la zone environnante du véhicule (10) étant détecté,
le mouvement détecté étant comparé avec un profil de mouvement prédéfini,
l'élément de fermeture (3) étant actionné automatiquement lorsque le mouvement détecté correspond au profil de mouvement prédéfini,
la détection du mouvement de l'objet dans la zone environnante et/ou la comparaison du mouvement détecté avec le profil de mouvement prédéfini s'effectuant en fonction des conditions environnantes détectées, **caractérisé en ce que**
un premier détecteur (1) du véhicule (10) détecte le mouvement de l'objet,
**en ce qu'**un deuxième détecteur (2) du véhicule (10) détecte les conditions environnantes,
**en ce que** la moyenne d'une valeur de sortie du deuxième détecteur (2) est calculée sur un intervalle de temps prédéterminé, qui se termine à l'instant de la détection du mouvement de l'objet, afin de générer une valeur moyenne, et
**en ce qu'**une valeur de seuil, laquelle doit être dépassée par une valeur de sortie du premier détecteur (1) pour que le mouvement détecté soit reconnu comme étant le profil de mouvement prédéfini, est choisie d'autant plus grande que la valeur moyenne est élevée.

2. Procédé selon la revendication 1, **caractérisé en ce que** la détection du mouvement de l'objet dans la zone environnante et/ou la comparaison du mouvement détecté avec le profil de mouvement prédéfini s'effectue en fonction des conditions environnantes détectées
* **en ce qu'**un paramètre (16) du profil de mouvement prédéfini est adapté en fonction des conditions environnantes, et/ou
* **en ce qu'**un premier algorithme (18), avec lequel le mouvement de l'objet est détecté, est choisi en fonction des conditions environnantes, et/ou
* **en ce qu'**un deuxième algorithme (15), avec lequel est effectuée la comparaison du mouvement détecté avec le profil de mouvement prédéfini, est choisi en fonction des conditions environnantes.

3. Procédé selon la revendication 1 ou 2, **caractérisé en ce que** le premier algorithme comprend un filtrage des valeurs de sortie du premier détecteur (1) et **en ce qu'**une qualité du filtre est réglée d'autant plus grande que la valeur moyenne est élevée.

4. Procédé selon l'une des revendications précédentes, **caractérisé en ce que** la valeur moyenne est de nouveau détermine après un changement d'allumage du véhicule (10).

5. Procédé selon l'une des revendications précédentes, **caractérisé en ce qu'**un détecteur (2) du véhicule (10) détecte les conditions environnantes et **en ce qu'**un actionnement de l'élément de fermeture (3) est désactivé pendant une durée prédéterminée lorsqu'une valeur de sortie du détecteur (2) se trouve au-dessus d'une valeur de seuil prédéterminée.

6. Procédé selon l'une des revendications précédentes, **caractérisé en ce que** le mouvement de l'objet dans la zone environnante est détectée par l'intermédiaire d'un détecteur optique (1) et **en ce que** lorsque les conditions environnantes détectées indiquent un contraste optique qui se trouve au-dessous d'une valeur de seuil de contraste, un gain avec lequel un signal de sortie du détecteur optique (1) est amplifié est augmenté, ou alors une source de lumière du véhicule (10) est activée afin d'éclairer l'objet.

7. Procédé selon l'une des revendications précédentes, **caractérisé en ce qu'**un certain nombre de comparaisons est défini, lors desquelles, successivement, le mouvement détecté ne correspond pas au profil de mouvement prédéfini, et **en ce qu'**une alerte visuelle et/ou sonore est délivrée sur le véhicule (10) lorsque le nombre dépasse une valeur de seuil prédéterminée.

8. Dispositif d'actionnement d'un élément de fermeture (3) d'un véhicule (10), le dispositif (20) comprenant un mécanisme (4) destiné à actionner automatiquement l'élément de fermeture (3), un contrôleur (5) et au moins un détecteur (1, 2),
le dispositif (20) étant configuré de telle sorte que le contrôleur (5) détecte les conditions environnantes dans une zone environnante du véhicule (10) à l'aide de l'au moins un détecteur (1, 2),
que le contrôleur (5) détecte un mouvement d'un objet dans la zone environnante du véhicule (10) à l'aide de l'au moins un détecteur (1, 2),
que le contrôleur (5) compare le mouvement détecté avec un profil de mouvement prédéfini,
que le contrôleur (5) commande le mécanisme (4) destiné à actionner automatiquement l'élément de fermeture (3) lorsque le contrôleur (5) reconnaît que le mouvement détecté correspond au profil de mouvement, et
que le contrôleur (5) effectue la détection du mouvement de l'objet dans la zone environnante et/ou la comparaison du mouvement détecté avec le profil de mouvement en fonction des conditions environnantes détectées,
**caractérisé en ce que**
l'au moins un détecteur comprend un premier détecteur (1) destiné à détecter le mouvement de l'objet et un deuxième détecteur (2) destiné à détecter les conditions environnantes,
et **en ce que** le dispositif (20) est configuré pour calculer la moyenne d'une valeur de sortie du deuxième détecteur (2) sur un intervalle de temps prédéterminé, qui se termine à l'instant de la détection du mouvement de l'objet, afin de générer une valeur moyenne, et pour choisir une valeur de seuil, laquelle doit être dépassée par une valeur de sortie du premier détecteur (1) pour que le mouvement détecté soit reconnu comme étant le profil de mouvement prédéfini, d'autant plus grande que la valeur moyenne est élevée.

9. Dispositif selon la revendication 8, **caractérisé en ce que** l'au moins un détecteur comprend un détecteur qui détecte à la fois les conditions environnantes et le mouvement de l'objet.

10. Dispositif selon la revendication 8 ou 9, **caractérisé en ce que** le dispositif (20) est configuré pour mettre en oeuvre le procédé selon l'une des revendications 2 à 7.

11. Véhicule équipé d'un élément de fermeture (3) et d'un dispositif (20) selon l'une des revendications 8 à 10.
